# EUROPÄISCHE PATENTSCHRIFT

(11) **EP 4 414 312 B1**
(45) Veröffentlichungstag und Bekanntmachung des Hinweises auf die Patenterteilung: **22.10.2025**
(21) Anmeldenummer: 24154244.8
(22) Anmeldetag: 26.01.2024
(51) Int. Cl.: B66C 1/02

(54) **SCHLAUCHHEBER**
HOSE LIFTER
DISPOSITIF DE LEVAGE DE TUYAU

(30) Priorität: 01.02.2023 DE 102023102439
(43) Veröffentlichungstag der Anmeldung: 14.08.2024
(73) Patentinhaber: J. Schmalz GmbH, 72293 Glatten (DE)
(72) Erfinder: Burt, Hans, 72160 Horb a.N. (DE); Urbschat, Fabian, 72270 Baiersbronn (DE); Müller, Daniel, 72221 Haiterbach (DE); Hoppe, Arthur, 72290 Loßburg (DE); Dreher, Stefan, 72218 Wildberg (DE)
(74) Vertreter: DREISS Patentanwälte PartG mbB

(56) Entgegenhaltungen:
- CN-A- 114 104 936
- DE-C5- 102008 028 205
- US-A1- 2019 344 453

## Beschreibung

Die Erfindung betrifft einen Schlauchheber gemäß dem Oberbegriff des Anspruchs 1.

Schlauchheber sind Unterdruck-Handhabungsvorrichtungen mit welchen Lasten mit Hilfe von Unterdruck angehoben, gegebenenfalls verlagert und wieder abgesetzt werden können. Die Hubkraft wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist, ggf. unter Wirkung der Schwerkraft. An einem Ende des Hubschlauchs ist üblicherweise ein Endeffektor zum Greifen eines Gegenstands angeordnet. Hierbei kann es sich beispielsweise um eine mechanische Greifvorrichtung handeln, insbesondere aber um eine Sauggreifvorrichtung.

Zum Ankoppeln des Endeffektors an den Hubschlauch ist eine Kopplungseinrichtung vorgesehen, mittels welcher der Endeffektor mit dem Hubschlauch verbindbar ist. Zu diesem Zweck sind verschiedene Lösungen bekannt. Beispielsweise ist es bekannt, den Endeffektor mit dem Hubschlauch zu verschrauben. Aus der DE 10 2008 028 205 C5 ist außerdem eine Kopplungseinrichtung bekannt, bei welcher der Sauggreifer vier gleichmäßig angeordnete Verriegelungszapfen aufweist, die in schlüssellochartige Aufnahmeöffnungen an der Unterseite der Kupplung eingreifen. Durch bajonettartiges Verdrehen des Sauggreifers kann dann eine Verbindung zwischen Endeffektor und Hubschlauch hergestellt werden.

Die US 2019/344453 A1 ist zudem eine Haltevorrichtung für einen Sauggreifer bei einer Unterdruckhandhabungseinrichtung bekannt. Die Haltevorrichtung umfasst eine an einer Basis angeordnete Schiebesitzaufnahme und einen an dem Sauggreifer angeordneten Gleitschuh, welcher in einer bestimmten Orientierung in die Schiebesitzaufnahme einschiebbar ist. Dieses Dokument offenbart einen Schlauchheber gemäß dem Oberbegriff des Anspruchs 1.

Aus der CN 114 104 936 A ist zudem eine Gipskartonaufhängung bekannt, die einen Aufhängekörper und eine Vakuumadsorptionseinheit umfasst.

Die genannten Lösungen erfordern üblicherweise das positionsgenaue Einstecken des einen Verbindungsabschnitts in den anderen, was die Handhabung beim Ankoppeln eines Sauggreifers erschwert, da bspw. der Endeffektor nur in einer ganz bestimmten Drehlage mit dem Hubschlauch verbunden werden kann. Zudem sind die bekannten Konstruktionen vergleichsweise kompliziert und hochaufbauend ausgebildet.

Die Erfindung liegt die Aufgabe zugrunde, die Ankopplung eines Endeffektors an einen Hubschlauch zu verbessern, insbesondere ein einfaches und intuitives Ankoppeln eines Endeffektors an den Hubschlauch zu ermöglichen. Darüber hinaus ist eine einfache und robuste konstruktive Ausgestaltung wünschenswert.

Diese Aufgabe wird erfindungsgemäß durch einen Schlauchheber mit den Merkmalen des Anspruchs 1 gelöst.

Der Schlauchheber umfasst einen Hubschlauch, welcher sich entlang einer, vorzugsweise vertikalen, Hubschlauch-Längsachse erstreckt. Der Hubschlauch weist insbesondere einen Schlauchinnenraum auf. Der Hubschlauch ist insbesondere durch Beaufschlagung des Schlauchinnenraums mit Unterdruck verkürzbar.

Der Schlauchheber umfasst außerdem einen Endeffektor, insbesondere eine Greifvorrichtung zum Greifen eines Gegenstands. Vorzugsweise umfasst der Schlauchheber eine Sauggreifvorrichtung, beispielsweise einen Flächensauggreifer, Elastomersauger oder eine Saugerspinne.

Der Schlauchheber umfasst außerdem eine Kopplungseinrichtung zur, insbesondere wiederholbar lösbaren, Ankopplung des Endeffektors an den Hubschlauch. Der Endeffektor ist insofern mittels der Kopplungseinrichtung an den Hubschlauch, insbesondere wiederholbar lösbar, ankoppelbar oder an diesem angekoppelt. Die Kopplungseinrichtung umfasst einen Hubschlauch-seitigen ersten Kopplungsabschnitt, welcher mit dem Hubschlauch verbunden ist, und einen Endeffektor-seitigen zweiten Kopplungsabschnitt, welcher mit dem Endeffektor verbunden ist.

Einer der beiden Kopplungsabschnitte, also entweder der erste Kopplungsabschnitt oder der zweite Kopplungsabschnitt, weist einen Einführabschnitt auf und der andere Kopplungsabschnitt, also der zweite oder der erste Kopplungsabschnitt, weist einen Aufnahmeabschnitt zur Aufnahme des Einführabschnitts auf. Der Aufnahmeabschnitt und der Einführabschnitt sind derart ausgebildet, insbesondere derart aufeinander abgestimmt, dass der Einführabschnitt in einer, vorzugsweise linearen, Einführrichtung in den Aufnahmeabschnitt einführbar, insbesondere einschiebbar, ist und durch dieses Einführen, insbesondere Einschieben, des Einführabschnitts in den Aufnahmeabschnitt in Einführrichtung der erste Kopplungsabschnitt und der zweite Kopplungsabschnitt und somit der Endeffektor und der Hubschlauch miteinander verbindbar sind. Insofern sind der Einführabschnitt und der Aufnahmeabschnitt insbesondere derart ausgebildet, dass durch Einführen, insbesondere Einschieben, des Einführabschnitts in den Aufnahmeabschnitt in Einführrichtung eine Verbindung zwischen Endeffektor und Hubschlauch herstellbar ist, insbesondere der Endeffektor an dem Hubschlauch befestigbar ist.

Der Einführabschnitt und der Aufnahmeabschnitt sind außerdem derart ausgebildet, insbesondere derart aufeinander abgestimmt, dass der Einführabschnitt in beliebigen Drehlagen um eine zu der Einführrichtung orthogonale Endeffektor-Drehachse in den Aufnahmeabschnitt entlang der Einführrichtung einführbar, insbesondere einschiebbar, ist.

Eine solche Ausgestaltung ermöglicht ein besonders einfaches Ankoppeln des Endeffektors an den Hubschlauch, da zum Verbinden des Endeffektors und des Hubschlauchs lediglich der erste Kopplungsabschnitt und der zweite Kopplungsabschnitt entlang der Einführrichtung relativ zueinander bewegt werden müssen. Insbesondere sind nach dem Einschieben des Einführabschnitts in den Aufnahmeabschnitt keine zusätzlichen Handlungen erforderlich, um eine Verbindung zwischen Endeffektor und Hubschlauch herzustellen. Dadurch, dass der Einführabschnitt in beliebigen Drehlagen um die Endeffektor-Drehachse in den Aufnahmeabschnitt einführbar ist, entfällt insbesondere ein aufwändiges Ausrichten des Endeffektors relativ zu dem Hubschlauch, was ein Ankoppeln noch einfacher und intuitiver gestaltet. Insbesondere ermöglicht dies im Umkehrschluss, dass der Aufnahmeabschnitt aus verschiedenen Winkeln um die Endeffektor-Drehachse entlang einer der Einführrichtung entgegengesetzten Vorschubrichtung auf den Einführabschnitt aufschiebbar ist und somit der Einführabschnitt in den Aufnahmeabschnitt eingeführt wird.

Vorzugsweise sind der Einführabschnitt und der Aufnahmeabschnitt derart ausgebildet, dass der Einführabschnitt entlang nur einer Einführrichtung, aber in beliebigen Drehlagen um eine zu der Einführrichtung orthogonale Endeffektor-Drehachse in den Aufnahmeabschnitt entlang der Einführrichtung einführbar, insbesondere einschiebbar, ist. Insofern kann ein Einschieben des Einführabschnitts in den Aufnahmeabschnitt ausschließlich entlang einer einzigen Richtung, der Einführrichtung, möglich sein, der Einführabschnitt aber um eine zu der Einführachse orthogonale Drehachse beliebig verdreht sein. Vorzugsweise ist die Einführrichtung zu der Hubschlauch-Längsachse orthogonal, orientiert, insbesondere horizontal. Die Endeffektor-Drehachse ist dann vorzugsweise zu der Hubschlauch-Längsachse parallel orientiert.

In vorteilhafter Weise umfasst der Hubschlauch-seitige, erste Kopplungsabschnitt den Aufnahmeabschnitt und der Endeffektor-seitige zweite Kopplungsabschnitt den Einführabschnitt. Eine solche Ausgestaltung begünstigt es beispielsweise einen in einem Endeffektor-Magazin vorgehaltenen Endeffektor aus verschiedenen Drehrichtungen um die Endeffektor-Drehachse mit dem Hubschlauch zu verbinden.

Eine besonders intuitive Bedienung kann sich dann ergeben, wenn der Aufnahmeabschnitt einen Anschlag für den Einführabschnitt aufweist, wobei der Anschlag eine Einführstrecke des Einführabschnitts in dem Aufnahmeabschnitt in Einführrichtung begrenzt und somit eine Endlage des Einführabschnitts in dem Aufnahmeabschnitt in Einführrichtung definiert.

In vorteilhafter Weise umfasst der Aufnahmeabschnitt einen Führungsschlitz, welcher sich entlang der Einführrichtung axial erstreckt. Der Führungsschlitz stellt insbesondere eine Linearführung für den Einführabschnitt entlang der Einführrichtung bereit. Der Führungsschlitz kann durch eine Aussparung in dem ersten oder zweiten Kopplungsabschnitt ausgebildet sein.

Vorzugsweise umfasst der Führungsschlitz ein offenes Ende (Aufnahmeöffnung) zur Einführung des Einführabschnitts und ein geschlossenes Ende, welches eine Einführstrecke des Einführabschnitts in dem Aufnahmeabschnitt in Einführungsrichtung begrenzt. Das geschlossene Ende bildet insofern einen Anschlag für den Einführabschnitt. Der Anschlag definiert insbesondere eine Endlage des Einführabschnitts in dem Aufnahmeabschnitt in Einführrichtung. Eine solche Ausgestaltung macht einen Ankopplungsvorgang noch intuitiver, da die Bedienperson zum Ankoppeln des Endeffektors an den Hubschlauch lediglich den ersten Kopplungsabschnitt und den zweiten Kopplungsabschnitt entlang der Einführrichtung relativ zueinander bewegen muss bis dieser einen Widerstand durch den Anschlag spürt.

Wie vorstehend erwähnt, ermöglicht es die vorgeschlagene Kopplungseinrichtung, den Endeffektor in beliebigen Drehlagen um eine zu der Einführrichtung orthogonale Endeffektor-Drehachse in den Aufnahmeabschnitt einzuschieben. Darüber hinaus kann es zudem vorteilhaft sein, wenn der Einführabschnitt und der Aufnahmeabschnitt derart ausgebildet sind, dass Einführabschnitt und Aufnahmeabschnitt - und somit erster und zweiter Kopplungsabschnitt - auch dann, wenn der Einführabschnitt bereits in den Aufnahmeabschnitt eingeführt ist, insbesondere sich in der Endlage an dem Anschlag befindet, relativ zueinander um die Endeffektor-Drehachse verdrehbar ist. Insofern kann der Endeffektor auch im angekoppelten Zustand relativ zu dem Hubschlauch verdrehbar sein. Auf diese Weise ist es beispielsweise möglich, eine Drehlage des Endeffektors und somit eines mit dem Endeffektor verbundenen Gegenstand im gehaltenen Zustand noch zu verändern, z.B. um den Gegenstand in eine definierte Ablageposition zu überführen.

In diesem Zusammenhang kann es vorteilhaft sein, wenn der Einführabschnitt zumindest abschnittsweise, also zumindest über einen Winkelbereich um die Endeffektor-Drehachse, rotationssymmetrisch um die Endeffektor-Drehachse ausgebildet ist.

Um eine Verdrehbarkeit auch bei Anlage des Einführabschnitts an dem Anschlag bzw. dem geschlossenen Ende des Führungsschlitzes zu begünstigen, kann es vorteilhaft sein, wenn der Anschlag durch eine Wandung des Führungsschlitzes bereitgestellt ist, wobei die Wandung zu einer den Einführabschnitt um die Drehachse begrenzenden Wandung komplementär ausgebildet, insbesondere deren Negativform aufweist.

Vorzugsweise sind der Einführabschnitt und der Aufnahmeabschnitt derart ausgebildet, insbesondere derart aufeinander abgestimmt, dass der Einführabschnitt dann, wenn er in dem Aufnahmeabschnitt aufgenommen ist, entlang der Endeffektor-Drehachse, also insbesondere in vertikaler Richtung, formschlüssig gehalten ist. Somit kann ein ungewolltes Abfallen des Endeffektors, bspw. in Folge der Schwerkraft, effektiv verhindert werden.

In vorteilhafter Weise kann der Einführabschnitt einen Vorsprung aufweisen, welcher sich in einer Vorsprungrichtung von dem Endeffektor (bei Anordnung des Einführabschnitts an dem Endeffektor-seitigen Kopplungsabschnitt) oder dem Hubschlauch (bei Anordnung des Einführabschnitts an dem Hubschlauch-seitigen Kopplungsabschnitt) weg erstreckt. Vorzugsweise verlaufen Vorsprungrichtung und Endeffektor-Drehachse kollinear, also entlang einer identischen Achse. Ist der Vorsprung an dem Endeffektor angeordnet, ist es insbesondere vorteilhaft, wenn sich der Vorsprung in Vorsprungrichtung von einer Seite des Endeffektors weg erstreckt, welche von einem Greifmittel des Endeffektors, z.B. einem Saugkörper, abgewandten ist bzw. diesem gegenüberliegt.

Der Aufnahmeabschnitt, insbesondere Führungsschlitz, kann dann derart ausgebildet sein, dass der Aufnahmeabschnitt im eingeführten Zustand des Einführabschnitts (also dann, wenn der Einführabschnitt in den Aufnahmeabschnitt eingeschoben ist) den Vorsprung zumindest abschnittsweise hintergreift oder umgreift, vorzugsweise derart, dass der Einführabschnitt in dem Aufnahmeabschnitt entlang der Endeffektor-Drehachse formschlüssig gehalten ist.

In diesem Zusammenhang kann es vorteilhaft sein, wenn sich der Vorsprung in Vorsprungrichtung betrachtet zumindest abschnittsweise radial aufweitet, insbesondere stetig oder unstetig. Insofern kann der Vorsprung derart ausgebildet sein, dass an zumindest einer ersten Position des Vorsprungs, welche einer zweiten Position entlang der Vorsprungrichtung nachfolgt, eine radiale Erstreckung des Vorsprungs größer ist als in der zweiten Position.

Im Rahmen einer vorteilhaften Ausgestaltung, kann sich der Vorsprung in Vorsprungrichtung zumindest abschnittsweise stetig aufweiten. Insbesondere kann sich der Vorsprung in Vorsprungrichtung zumindest abschnittsweise konisch aufweiten, was eine einfache Fertigung des Vorsprungs begünstigt.

Es ist auch möglich, dass der Vorsprung entlang seiner Längserstreckung in Vorsprungrichtung zumindest eine radiale Auskragung oder eine radial vorstehende Stufe aufweist. Beispielsweise kann der Vorsprung einen sich entlang der Vorsprungrichtung, insbesondere entlang der Endeffektor-Drehachse, erstreckenden Basisabschnitt und einen sich in Vorsprungrichtung an den Basisabschnitt anschließenden Auskragungsabschnitt aufweisen, wobei der Vorsprung in dem Auskragungsabschnitt zumindest entlang eines Winkelbereichs um die Endeffektor-Drehachse radial verbreitert ist. Insofern kann der Vorsprung entlang seiner Erstreckung in Vorsprungrichtung zumindest in einem Auskragungsabschnitt, welcher einem Basisabschnitt des Vorsprungs in Vorsprungrichtung axial nachgelagert ist, eine radiale Verbreiterung aufweisen. Bei einer solchen Ausgestaltung kann es dann vorteilhaft sein, wenn der Aufnahmeabschnitt derart ausgebildet ist, dass er den Auskragungsabschnitt im eingeführten Zustand des Einführabschnitts in dem Aufnahmeabschnitt hintergreift oder umgreift.

Insbesondere kann der Vorsprung einen im wesentlichen T-förmigen Querschnitt aufweisen. Eine besonders einfach zu fertigende Ausgestaltung kann sich beispielsweise dann ergeben, wenn der Vorsprung einen ersten Zylinderabschnitt und einen sich in Vorsprungrichtung an den ersten Zylinderabschnitt axial anschließenden zweiten Zylinderabschnitt aufweist, wobei ein Durchmesser des zweiten Zylinderabschnitts größer ist als ein Durchmesser des ersten Zylinderabschnitts. Der Aufnahmeabschnitt kann dann insbesondere derart ausgebildet sein, dass er den zweiten Zylinderabschnitt im eingeführten Zustand des Einführabschnitts hintergreift oder umgreift. Der Zylinder kann als Vollzylinder oder als Hohlzylinder ausgebildet sein.

Eine besonders zuverlässige Halterung des Endeffektors an dem Hubschlauch kann sich dann ergeben, wenn der Aufnahmeabschnitt und der Einführabschnitt in einem Querschnitt entlang der Einführrichtung betrachtet zueinander komplementär oder im Wesentlichen komplementär ausgebildet sind, vorzugsweise derart, dass der Einführabschnitt in dem Aufnahmeabschnitt entlang der Endeffektor-Drehachse formschlüssig gehalten ist. Insbesondere kann der Aufnahmeabschnitt in einem Querschnitt entlang der Einführrichtung betrachtet eine Negativform des Einführabschnitts aufweisen.

Im Rahmen einer vorteilhaften Weiterbildung kann die Kopplungseinrichtung derart ausgebildet sein, dass in zumindest einer Einschiebeposition des Einführabschnitts in dem Aufnahmeabschnitt, vorzugweise in der Endlage des Einführabschnitts (also bei Anlage des Einführabschnitts an dem Anschlag bzw. an dem geschlossenen Ende der des Führungsschlitzes), eine Fluidverbindung zwischen dem Hubschlauch und dem Endeffektor hergestellt ist. Insbesondere bei einer Ausgestaltung des Endeffektors als Sauggreifvorrichtung ist es somit möglich, die Sauggreifvorrichtung über die Kopplungseinrichtung mit Unterdruck zu versorgen. In diesem Zusammenhang ist es besonders vorteilhaft, wenn der Hubschlauch einen Schlauchinnenraum aufweist und die Fluidverbindung mit dem Schlauchinnenraum strömungsverbunden ist, insbesondere derart, dass der Endeffektor durch den Schlauchinnenraum hindurch mit Unterdruck versorgt werden kann. Auf diese Weise können zusätzliche, insbesondere außenliegende, Fluidleitungen entfallen, was ein Ankoppeln des Endeffektors weiter vereinfacht und zudem Störkonturen beim Greifen reduziert.

In diesem Zusammenhang kann es vorteilhaft sein, wenn der Einführabschnitt eine erste Fluidöffnung, insbesondere Bohrung, aufweist und wobei der Aufnahmeabschnitt eine zweite Fluidöffnung, insbesondere Bohrung, derart aufweist, dass zumindest in einer Einschiebeposition des Einführabschnitts in dem Aufnahmeabschnitt, vorzugsweise in der Endlage des Einführabschnitts in dem Aufnahmeabschnitt eine Strömungsverbindung zwischen der ersten und der zweiten Fluidöffnung hergestellt ist, insbesondere die erste und die zweite Fluidöffnung miteinander fluchten, weiter insbesondere koaxial zueinander, insbesondere koaxial zu der Endeffektor-Drehachse, angeordnet sind. Die erste Fluidöffnung ist vorzugsweise mittig, insbesondere konzentrisch zu der Endeffektor-Drehachse an dem Einführabschnitt angeordnet. Wie vorstehend erläutert, kann der Vorsprung durch einen Hohlzylinder gebildet sein. Dann ist es beispielsweise denkbar, dass eine axiale Zylinderöffnung des Hohlzylinders die erste Fluidöffnung bereitstellt. Je nach Anordnung ist die erste oder die zweite Fluidöffnung entweder mit dem Endeffektor, z.B. Sauggreifvorrichtung, oder mit dem Hubschlauch strömungsverbunden. Besonders vorteilhaft kann es sein, wenn der Einführabschnitt an dem Endeffektor angeordnet ist und die erste Fluidöffnung mit dem Endeffektor strömungsverbunden und wenn der Aufnahmeabschnitt an dem Hubschlauch angeordnet ist und die zweite Fluidöffnung mit dem Hubschlauch, insbesondere einem Schlauchinnenraum des Hubschlauchs, strömungsverbunden ist.

Im Rahmen einer vorteilhaften Weiterbildung kann die Kopplungseinrichtung eine Drehverriegelungseinrichtung aufweisen. Die Drehverriegelungseinrichtung ist insbesondere dazu ausgebildet, den Endeffektor im angekoppelten Zustand (also dann, wenn der Einführabschnitt in den Aufnahmeabschnitt eingeführt ist, insbesondere sich der Einführabschnitt in der Endlage befindet) gegen eine Verdrehung um die Endeffektor-Drehachse zu sichern.

Die Drehverriegelungseinrichtung kann vorzugsweise dazu ausgebildet sein, in einer Verriegelungskonfiguration den Endeffektor rastend zu fixieren. Beispielsweise kann die Drehverriegelungseinrichtung wenigstens ein, insbesondere translatorisch oder rotatorisch verlagerbares, Rastelement und wenigstens eine Rastaufnahme zur rastenden Aufnahme des Rastelements aufweisen. Vorzugsweise sind das Rastelement und die Rastaufnahme derart ausgebildet und angeordnet, dass das Rastelement in wenigstens einer Drehlage des Einführabschnitts um die Endeffektor-Drehachse in die Rastaufnahme eingreift. Um eine Drehverriegelung in verschiedenen Drehlagen des Endeffektors um die Endeffektor-Drehachse zu ermöglichen, kann die Rastvorrichtung eine Mehrzahl von Rastelementen aufweisen. Die Rastelemente können insbesondere entlang eines Umfangs um die Endeffektor-Drehachse verteilt angeordnet sein.

Das wenigstens Rastelement kann Hubschlauch-seitig angeordnet sein, bspw. an dem Aufnahmeabschnitt. Dann kann die wenigstens eine Rastaufnahme Endeffektor-seitig angeordnet sein, insbesondere an dem Einführabschnitt. Beispielsweise ist es denkbar, dass die wenigstens eine Rastaufnahme als lokale Aussparung in dem Einführabschnitt ausgebildet ist. Es ist auch denkbar, dass das wenigstens eine Rastelement Endeffektor-seitig angeordnet ist und die wenigstens eine Rastaufnahme Hubschlauch-seitig.

Im Rahmen einer vorteilhaften Weiterbildung kann die Drehverriegelungseinrichtung derart ausgebildet sein, dass eine Drehverriegelung durch axiale Verlagerung des Einführabschnitts relativ zu dem Aufnahmeabschnitt entlang der Einführrichtung aktivierbar (Drehbewegung des Endeffektors um die Endeffektor-Drehachse blockiert) und wieder deaktivierbar (Drehbewegung des Endeffektors um die Endeffektor-Drehachse freigegeben) ist, insbesondere durch Verlagerung in Einführrichtung aktivierbar und Verlagerung entgegen der Einführrichtung wieder deaktivierbar ist. Dies begünstigt einen einfachen Endeffektor-Wechsel, da insbesondere keine zusätzlichen Handgriffe erforderlich sind, um die Drehverriegelungseinrichtung zu lösen. Besonders vorteilhaft ist es, wenn die Drehverriegelungseinrichtung derart ausgebildet ist, dass eine Verlagerung des Endeffektors entgegen der Einführrichtung (bspw. um Abkoppeln des Endeffektors) nicht blockiert ist.

Bei einer Ausgestaltung der Drehverriegelungsvorrichtung mit Rastelement und Rastaufnahme können diese insbesondere derart ausgebildet sein, dass das Rastelement in zumindest einer Drehlage des Endeffektors um die Endeffektor-Drehachse entlang der Einführrichtung in die Rastaufnahme einführbar ist und somit eine Drehverriegelung aktivierbar ist. In diesem Zusammenhang kann es besonders vorteilhaft sein, wenn das Rastelement an dem geschlossenen Ende des Führungsschlitzes (Aufnahmeabschnitt) angeordnet ist und die wenigstens eine Rastaufnahme an dem Einführabschnitt angeordnet ist oder umgekehrt.

Vorzugsweise ist das Rastelement translatorisch oder rotatorisch verlagerbar, insbesondere schwenkbar, gehaltert, insbesondere zwischen einer Verriegelungsstellung, in welcher das Rastelement in die Rastaufnahme eingreift, und einer Freigabestellung, in welcher das Rastelement nicht in die Rastaufnahme eingreift. Darüber hinaus kann es vorteilhaft sein, wenn das Rastelement in die Verriegelungsstellung beaufschlagt, insbesondere vorgespannt, vorzugsweise federvorgespannt, ist. Das Rastelement kann dann derart ausgebildet sein, dass das Rastelement durch Beaufschlagung in Einführrichtung entgegen der Vorspannung in die Freigabestellung überführbar ist. Bei Ausgestaltungen mit translatorisch verlagerbarem Rastelement kann insofern eine Verschiebeachse zu der Einführrichtung parallel verlaufen. Bei Ausgestaltungen mit schwenkbar gelagertem Rastelement kann eine Schwenkachse insbesondere zu der Einführrichtung orthogonal verlaufen. Wie nachfolgend noch näher erläutert, begünstigt eine solche Ausgestaltung eine einfache und intuitive Bedienung des Schlauchhebers. In diesem Zusammenhang kann es besonders vorteilhaft sein, wenn das Rastelement in der Freigabestellung bündig mit einer den Anschlag des Aufnahmeabschnitts des Führungsschlitzes bildenden Wandung angeordnet ist.

Im Rahmen einer vorteilhaften Weiterbildung kann die Kopplungseinrichtung eine Axial-Verriegelungseinrichtung aufweisen, welche dazu ausgebildet ist, den Einführabschnitt dann, wenn er in dem Aufnahmeabschnitt eingeschoben ist, gegen ein Verschieben aus dem Aufnahmeabschnitt heraus, also entgegen der Einführrichtung zu sichern. Die Axial-Verriegelungseinrichtung bildet insofern eine Art Verliersicherung für den Einführabschnitt und somit für den Endeffektor. Eine Verriegelung erfolgt insofern vorzugsweise in horizontaler Richtung. Insbesondere kann die Axial-Verriegelungseinrichtung dazu ausgebildet sein, den Einführabschnitt gegen ein Verschieben innerhalb des Aufnahmeabschnitts entgegen der Einführrichtung zu sichern.

Besonders vorteilhaft ist es, wenn die Axial-Verriegelungseinrichtung derart ausgebildet ist, dass sie bei Erreichen einer vorbestimmten Einschiebeposition des Einführabschnitts in dem Aufnahmeabschnitt, insbesondere bei Erreichen der Endlage (also dann, wenn der Einführabschnitt an dem Anschlag des Aufnahmeabschnitts bzw. des Führungsschlitzes anliegt), selbsttätig verriegelt. Insofern kann nach dem Einschieben des Einführabschnitts in den Aufnahmeabschnitt der Einführabschnitt automatisch verriegelt werden, insbesondere ohne, dass ein Bediener zusätzliche Handgriffe vornehmen muss. Beispielsweise ist es denkbar, dass die Axial-Verriegelungseinrichtung eine oder mehrere Rastnasen oder Schwenkriegel aufweist, welche in eine Verriegelungsstellung beaufschlagt, insbesondere federvorgespannt, sind. Die Verriegelungseinrichtung kann insbesondere derart ausgebildet sein, dass eine Verriegelung manuell lösbar ist, beispielsweise durch Betätigen eines Tasters.

Im Rahmen einer vorteilhaften Weiterbildung kann der Schlauchheber außerdem eine Bedienvorrichtung mit einem, insbesondere einhändig umgreifbaren, Bediengriff zum Verlagern des Hubschlauchs aufweisen. Die Bedienvorrichtung ist insbesondere an einem Ende des Hubschlauchs angeordnet, insbesondere gehaltert. Insofern ist die Bedienvorrichtung insbesondere zwischen Hubschlauch und Endeffektor angeordnet. Bei einer Ausgestaltung mit Bedienvorrichtung kann dann der Hubschlauch-seitige Kopplungsabschnitt, insbesondere der Aufnahmeabschnitt, an der Bedienvorrichtung angeordnet sein. Beispielsweise ist es denkbar, dass der Aufnahmeabschnitt, besondere der Führungsschlitz, in einem Gehäuse der Bedienvorrichtung ausgebildet ist.

Die Erfindung wird im Folgenden anhand der Figuren näher erläutert. Es zeigen:
- Fig. 1: eine skizzierte Darstellung einer Ausgestaltung eines Schlauchebers;
- Fig. 2: eine skizzierte Darstellung zur Erläuterung der Kopplungseinrichtung in einer perspektivischen;
- Fig. 3a, b: skizzierte Darstellungen des Endeffektors mit Endeffektor-seitigem Kopplungsabschnitt in einer perspektivischen Ansicht (Ansicht a) und in einer Seitenansicht (Ansicht b);
- Fig. 4a, b: skizzierte Darstellungen der Bedienvorrichtung mit Hubschlauch-seitigem Kopplungsabschnitt in einer perspektivischen Ansicht (Ansicht a) und in einer Schnittansicht (Ansicht b);
- Fig. 5: eine skizzierte Darstellung der Kopplungseinrichtung im verbundenen Zustand von erstem und zweitem Kopplungsabschnitt in einer Schnittansicht;
- Fig. 6a, b: skizzierte Darstellungen zur Erläuterung der Funktionsweise der Kopplungseinrichtung;
- Fig. 7: eine skizzierte Darstellung einer Baugruppe einer weiteren Ausgestaltung eines Schlauchhebers mit Drehverriegelungseinrichtung in einer Schnittansicht; und
- Fig. 8: eine skizzierte Darstellung des Schlauchhebers gemäß Fig. 7 in einer perspektivischen Ansicht.

In der nachfolgenden Beschreibung sowie in den Figuren sind für identische oder einander entsprechende Merkmale jeweils dieselben Bezugszeichen verwendet.

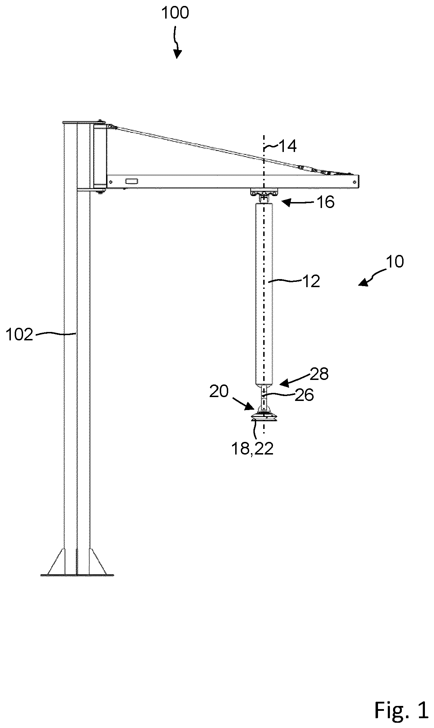

Die Figur 1 zeigt eine Ausgestaltung eines Schlauchhebers, welcher insgesamt mit dem Bezugszeichen 10 bezeichnet ist. Der Schlauchheber 10 ist im dargestellten Beispiel Teil einer übergeordneten Handhabungsanlage 100. Die Handhabungsanlage 100 umfasst einen Manipulator 102, an welchem der Schlauchheber 10 gehaltert ist. Der Manipulator 102 ist beispielhaft als Säulenschwenkkran ausgebildet.

Der Schlauchheber 10 umfasst einen Hubschlauch 12, welcher sich entlang einer Hubschlauch-Längsachse 14 erstreckt. Wie aus Figur 1 ersichtlich, entspricht die Hubschlauch-Längsachse 14 des Hubschlauchs 12 der Vertikalen. Der Hubschlauch 12 umschließt einen Schlauchinnenraum, der im Betriebszustand mittels einer nicht näher dargestellten Unterdruckversorgung evakuiert wird. Je nach Druckniveau im Schlauchinnenraum wird der Hubschlauch 12 reversibel verkürzt oder verlängert sich, z.B. unter der Wirkung der Gewichtskraft.

Im Beispiel ist der Hubschlauch 12 an einem ersten (oberen) Ende 16 an dem Manipulator 102 befestigt und somit von dem Manipulator 102 verlagerbar. Bei nicht dargestellten Ausgestaltungen ist es auch denkbar, dass der Hubschlauch 12 an seinem oberen Ende 16 mit einem sonstigen Träger oder Gerüst verbunden ist.

Der Schlauchheber 10 umfasst außerdem einen Endeffektor 18 zum Greifen eines Gegenstandes (nicht dargestellt). Der Endeffektor 18 ist über eine Kopplungseinrichtung 20 mit dem Hubschlauch 12 wiederholbar lösbar verbunden (nachfolgend noch im Detail erläutert). Durch Verkürzung des Hubschlauchs 12 kann somit der Endeffektor 18 und ein von dem Endeffektor 18 gehaltener Gegenstand angehoben werden.

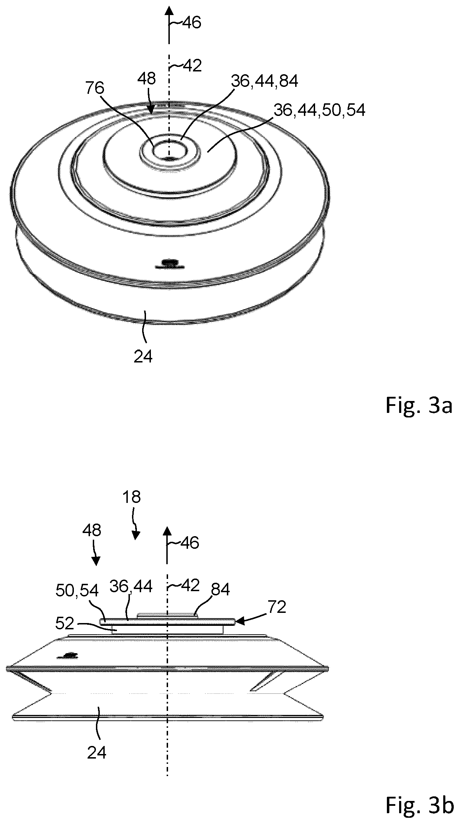

Beispielhaft und bevorzugt ist der Endeffektor 18 als Sauggreifvorrichtung 22 zum Ansaugen eines Gegenstands ausgebildet. Im Konkreten weist die Sauggreifvorrichtung 22 einen Saugkörper 24 zur Anlage an einem zu greifenden Gegenstand auf (vgl. Fig. 3b). Wie nachfolgend noch im Detail erläutert, ist die Sauggreifvorrichtung 22 vorzugsweise durch den Schlauchinnenraum des Hubschlauchs 12 hindurch mit Unterdruck versorgbar.

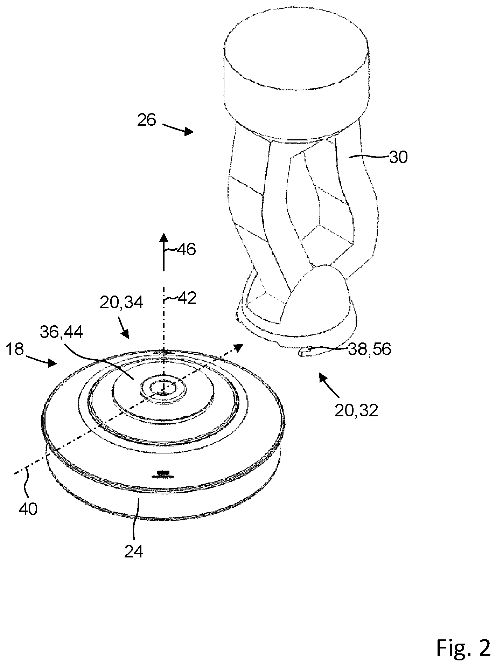

Um den Hubschlauch 12 sowie den Endeffektor 18 zu verlagern ist eine Bedienvorrichtung 26 vorgesehen, welche an dem zweiten (unteren) Ende 28 des Hubschlauchs 12 zwischen Hubschlauch 12 und Endeffektor 18 angeordnet ist. Wie aus Figur 2 ersichtlich, weist die Bedienvorrichtung 26 einen Handgriff 30 auf, welcher insbesondere derart ausgeformt ist, dass eine Bedienperson ihn mit einer Hand greifen kann.

Wie vorstehend erwähnt, ist der Endeffektor 12 über eine Kopplungseinrichtung 20 wiederholbar lösbar mit dem Hubschlauch 12 verbindbar. Die Kopplungseinrichtung 20 weist einen Hubschlauch-seitigen ersten Kopplungsabschnitt 32 und einen Endeffektor-seitigen zweiten Kopplungsabschnitt 34 auf. Im Beispiel ist der Hubschlauch-seitige erste Kopplungsabschnitt 32 an der Bedienvorrichtung 26 angeordnet. Insofern ist der Endeffektor 18 mittels der Kopplungseinrichtung 20 mit der Bedienvorrichtung 26 (und über diese mit dem Hubschlauch 12) verbindbar.

Der Endeffektor-seitige zweite Kopplungsabschnitt 34 umfasst einen Einführabschnitt 36 auf und der Hubschlauch-seitige erste Kopplungsabschnitt 32 weist einen entsprechenden Aufnahmeabschnitt 38 zur Aufnahme des Einführabschnitts 36 auf. Bei nicht dargestellten Ausgestaltungen ist auch eine umgekehrte Anordnung möglich. Insofern kann der Endeffektor-seitige zweite Kopplungsabschnitt 34 den Aufnahmeabschnitt 38 umfassen und der Hubschlauch-seitige erste Kopplungsabschnitt 32 den Einführabschnitt 36.

Wie nachfolgend noch im Detail erläutert, sind Einführabschnitt 36 und Aufnahmeabschnitt 38 derart aufeinander abgestimmt, dass der Einführabschnitt 36 entlang nur einer Einführrichtung 40, aber in beliebigen Drehlagen um eine zu der Einführrichtung 40 orthogonale Endeffektor-Drehachse 42 in den Aufnahmeabschnitt 38 einschiebbar ist.

Die Einführrichtung 40 ist beispielhaft und bevorzugt orthogonal zu der Hubschlauch-Längsachse 14 ausgebildet und verläuft insofern im Beispiel horizontal. Die Endeffektor-Drehachse 42 verläuft dementsprechend im Beispiel parallel zu der Hubschlauch-Längsachse 14 und insofern vertikal (vgl. Fig. 2).

Der Einführabschnitt 36 weist einen Vorsprung 44 auf, welcher sich in einer, insbesondere zu der Endeffektor-Drehachse 42 kollinearen, Vorsprungrichtung 46 von dem Endeffektor 18 weg erstreckt (vgl. Fig. 2 und 3a), im Beispiel von einer dem Saugkörper 24 abgewandten Oberseite 48 des Endeffektors 18 (Sauggreifvorrichtung 22).

Wie aus Figur 3b ersichtlich, weist der Vorsprung eine radiale Auskragung 50 auf. Beispielhaft und bevorzugt ist der Vorsprung 44 rotationssymmetrisch um die Endeffektor-Drehachse 42 ausgebildet.

Im konkreten Beispiel weist der Vorsprung 44 einen ersten Zylinderabschnitt 52 und einen sich in Vorsprungrichtung an den ersten Zylinderabschnitt 52 anschließenden zweiten Zylinderabschnitt 54 auf, wobei ein Durchmesser des zweiten Zylinderabschnitts 54 größer ist als ein Durchmesser des ersten Zylinderabschnitts 52. Der zweite Zylinderabschnitt 54 (Auskragungsabschnitt) bildet die radiale Auskragung 50.

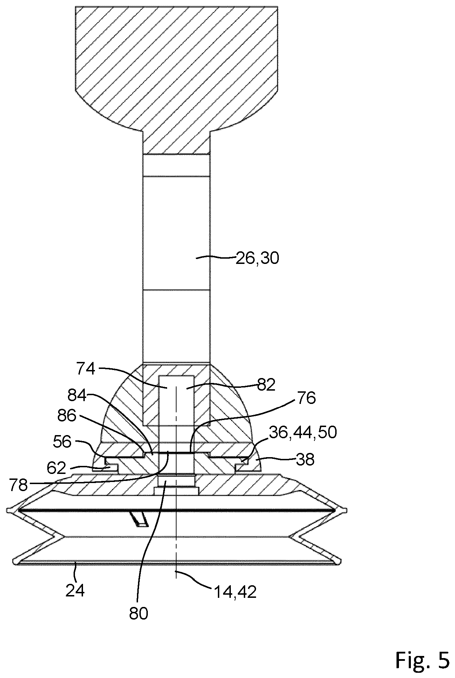

Wie aus Fig. 5 ersichtlich, weist der Einführabschnitt 36 (Vorsprung 44) entlang der Einführrichtung 42 betrachtet insofern einen im wesentlichen T-förmigen Querschnitt auf.

Bei nicht dargestellten Ausgestaltungen ist es beispielsweise auch denkbar, dass der Vorsprung 44 sich in Vorsprungrichtung 46 konisch aufweitet.

Der Aufnahmeabschnitt 38 ist vorzugsweise komplementär zu dem Einführabschnitt 36 ausgebildet, sodass der Einführabschnitt 36 im eingeschobenen Zustand entlang der Endeffektor-Drehachse 42 bzw. der Hubschlauch-Längsachse 14 formschlüssig in dem Aufnahmeabschnitt 38 gehalten ist.

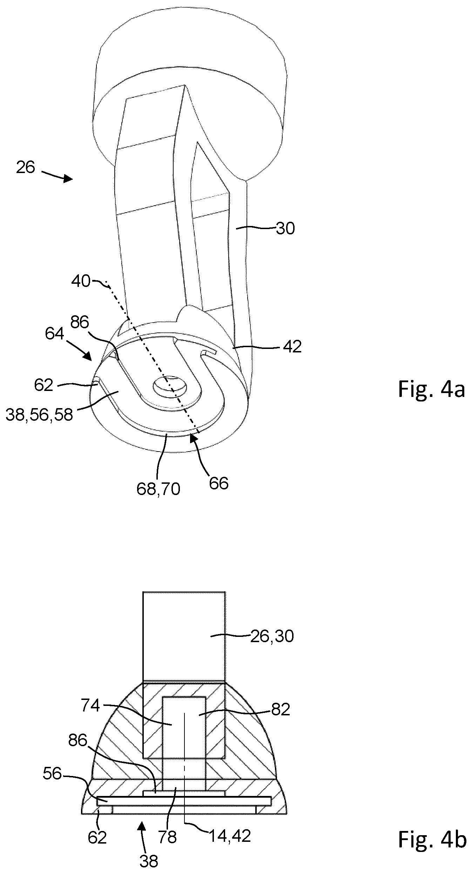

Wie bspw. aus Figur 4a ersichtlich, umfasst der Aufnahmeabschnitt 38 einen Führungsschlitz 56, welcher sich entlang der Einführrichtung 42 erstreckt. Der Führungsschlitz 56 bildet eine Linearführung für den Einführabschnitt 36 und definiert insofern die Einführrichtung 42. Im Beispiel ist der Führungsschlitz 56 als Aussparung 58 in einem Gehäuseabschnitt 60 der Bedienvorrichtung 26 ausgebildet.

Wie in Fig. 4b gezeigt, weist der Führungsschlitz 56 entlang der Einführrichtung 42 betrachtet einen zu dem Einführabschnitt im Wesentlichen komplementären (im Beispiel im wesentlichen C-förmigen) Querschnitt auf, sodass der Aufnahmeabschnitt 38 im eingeschobenen Zustand des Einführabschnitts 36 mit einer Wandung 62 die radiale Auskragung 50 (zweiter Zylinderabschnitt 54) des Einführabschnitts 36 umgreift. Insofern ist eine entlang der Endeffektor-Drehachse 42 bzw. der Hubschlauch-Längsachse 14 wirksame formschlüssige Verbindung gebildet (vgl. Fig. 5).

Dadurch, dass der Einführabschnitt 36 (Vorsprung 44) rotationssymmetrisch um die Endeffektor-Drehachse 42 ausgebildet ist, kann der Einführabschnitt 36 und somit der Endeffektor 18 auch im verbundenen Zustand, also dann, wenn der Einführabschnitt 36 in den Aufnahmeabschnitt 38 eingeschoben ist, noch um die Endeffektor-Drehachse 42 verdreht werden.

Wie in Figur 4a gezeigt, weist der Führungsschlitz 56 (Aufnahmeabschnitt 38) ein offenes Ende 64 zum Einführen des Einführabschnitts 36 und ein geschlossenes Ende 66 auf. Das geschlossene Ende 66 bildet einen Anschlag 68 für den Einführabschnitt 36 und definiert insofern eine Endlage des Einführabschnitts 36 in dem Aufnahmeabschnitt 38.

Im Beispiel ist der Anschlag 68 durch eine Wandung 70 des Führungsschlitzes 56 gebildet. Die Wandung 70 beispielhaft und bevorzugt komplementär zu einer den Vorsprung 44 (Einführabschnitt 36) um die Endeffektor-Drehachse 42 begrenzende Wandung 72 (vgl. Fig. 3b) ausgebildet. Die Wandung 70 des Führungsschlitzes 56 ist insofern ebenfalls rotationssymmetrisch um die Endeffektor-Drehachse 40 ausgebildet (vgl. Fig. 4a und 4b).

Wie aus Figur 4a ersichtlich, ist der Führungsschlitz 56 (Aufnahmeabschnitt 38) insbesondere derart relativ zu der Bedienvorrichtung 26 ausgerichtet, dass das offene Ende 64 des Führungsschlitzes 56 einer Bedienperson, welche den Handgriff 30 umgreift, abgewandt ist, sich also vorne an der Bedienvorrichtung 26 (proximal) befindet. Bei nicht dargestellten Ausgestaltungen kann der Führungsschlitz 56 auch um 180° um die Endeffektor-Drehachse 42 verdreht sein. Insofern kann der Führungsschlitz 56 (Aufnahmeabschnitt 38) einer Bedienperson, welche den Handgriff 30 umgreift, zugewandt sein (distal).

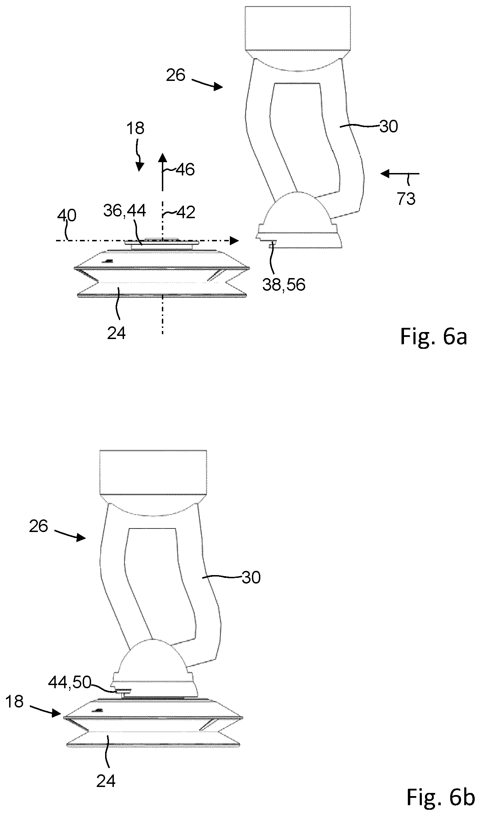

Wie in den Figuren 6a und 6b illustriert, muss eine Bedienperson zum Ankoppeln des Endeffektors 18 an den Hubschlauch 12 lediglich den Einführabschnitt 36 entlang der Einführrichtung 40 in den Aufnahmeabschnitt 38 einschieben, beispielsweise durch Verlagern der Bedienvorrichtung 26 (und somit des Aufnahmeabschnitts 38) relativ zu dem Endeffektor 18 in einer zu der Einführrichtung 40 entgegengesetzten Vorschubrichtung 73 (in Fig. 6a nach links). Dadurch, dass der Einführabschnitt 36 rotationssymmetrisch um die Endeffektor-Drehachse 42 ausgebildet ist, kann der Aufnahmeabschnitt 38 aus verschiedenen Winkeln um die Endeffektor-Drehachse 42 in Vorschubrichtung 73 über den Einführabschnitt 36 aufgeschoben werden.

Bei der gezeigten Ausführungsform ist die Kopplungseinrichtung 20 zudem derart ausgebildet, dass in der Endlage des Einführabschnitts 36 in dem Aufnahmeabschnitt 38 eine Fluidverbindung 74 zwischen dem Hubschlauch 12, insbesondere dem Schlauchinnenraum des Hubschlauchs 12, und dem Endeffektor 18, insbesondere dem Saugkörper 24, hergestellt ist (vgl. Fig. 5). Wie vorstehend erwähnt, ermöglicht es die Fluidverbindung 74 den Endeffektor 18, insbesondere den Saugkörper 24, durch den Schlauchinnenraum des Hubschlauchs 12 hindurch mit Unterdruck zu versorgen.

Wie aus Figur 5 ersichtlich, weist der Einführabschnitt 36 eine erste Fluidöffnung 76 auf und der Aufnahmeabschnitt 38 weist eine zweite Fluidöffnung 78 derart auf, dass dann, wenn sich der Einführabschnitt 36 in der Endlage befindet, also an dem Anschlag 68 (Wandung 70) anliegt, eine Strömungsverbindung zwischen der ersten Fluidöffnung 76 und der zweiten Fluidöffnung 78 hergestellt ist.

Die erste Fluidöffnung 76 ist dabei über einen ersten Fluidkanal 80 mit dem Saugkörper 24 strömungsverbunden. Vorzugsweise ist die erste Fluidöffnung 76 konzentrisch um die Endeffektor-Drehachse 42 angeordnet. Im konkreten Beispiel sind die erste Fluidöffnung 76 und der erste Fluidkanal 80 durch eine Aussparung, insbesondere Bohrung, in dem Vorsprung 44 ausgebildet. Der erste und der zweite Zylinderabschnitt 52, 54 sind insofern Hohlzylinderabschnitte.

Die zweite Fluidöffnung 78 an dem Aufnahmeabschnitt 38 ist über einen zweiten Fluidkanal 82 mit dem Schlauchinnenraum des Hubschlauchs 12 strömungsverbunden. Beispielhaft und bevorzugt kann der zweite Fluidkanal 82 durch den Handgriff 30 der Bedienvorrichtung 26 verlaufen. Der Handgriff 30 kann insofern als Hohlkörper ausgebildet sein.

Um die erste und die zweite Fluidöffnung 76, 78 abzudichten, kann der Vorsprung 44 einen Dichtabschnitt 84 aufweisen. Wie in den Figuren 3 und 5 gezeigt, kann der Dichtabschnitt 84 sich insbesondere in Vorsprungrichtung 46 betrachtet an die radiale Auskragung 50 (Auskragungsabschnitt bzw. zweiten Zylinderabschnitt 54) anschließen. Beispielhaft und bevorzugt ist der Dichtabschnitt 84 ebenfalls rotationssymmetrisch um die Endeffektor-Drehachse 42 ausgebildet. Der Aufnahmeabschnitt 38 (Führungsschlitz 56) kann dann eine komplementäre Aussparung 86 aufweisen (vgl. Fig. 4a und 5).

Bei nicht dargestellten Ausgestaltungen ist es auch möglich, dass keine Fluidverbindung 74 vorgesehen ist, beispielsweise bei einer Ausgestaltung des Endeffektors 18 als mechanischer Greifer. Die Fluidverbindung 74 ist insofern optional.

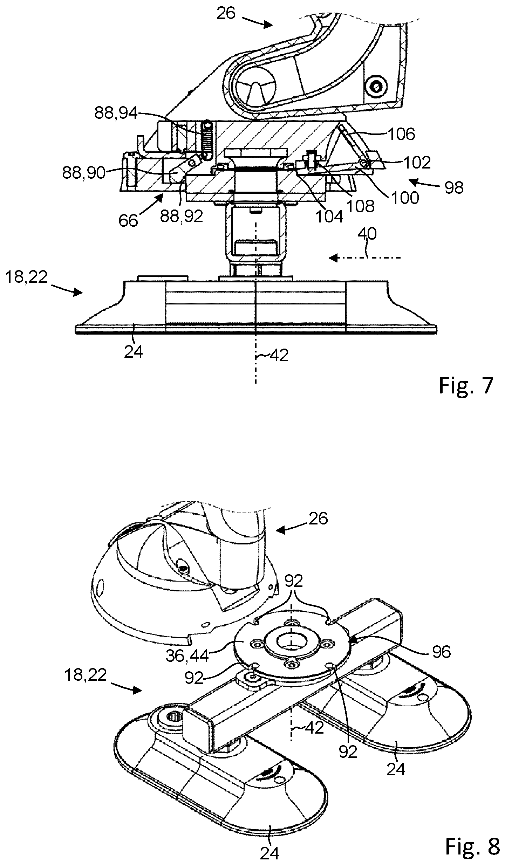

Die Figuren 7 und 8 zeigen eine weitere Ausgestaltung eines Schlauchhebers 10, bei dem die Kopplungseinrichtung 20 eine Drehverriegelungseinrichtung 88 aufweist. Die Drehverriegelungseinrichtung 88 ist dazu ausgebildet, den Endeffektor 18 im angekoppelten Zustand gegen ein Verdrehen um die Endeffektor-Drehachse 42 zu sichern.

Im dargestellten Beispiel ist die Drehverriegelungseinrichtung 88 als Rastvorrichtung ausgebildet, umfassend ein Rastelement 90 und wenigstens ein, im Beispiel vier, Rastaufnahmen 92 zur rastenden Aufnahme des Rastelements 90. Das Rastelement 90 ist beispielhaft Hubschlauch-seitig angeordnet und die Rastaufnahmen 92 sind Endeffektor-seitig angeordnet. Bei nicht dargestellten Ausgestaltungen ist aber auch eine umgekehrte Anordnung möglich.

Im konkreten Beispiel sind die Rastaufnahmen 92 an dem Einführabschnitt 36 angeordnet. Beispielhaft und bevorzugt sind die Rastaufnahmen 92 entlang eines Umfangs um die Endeffektor-Drehachse 42 verteilt angeordnet.

Das Rastelement 90 und die Rastaufnahmen 92 sind derart ausgebildet, dass dann, wenn das Rastelement 90 in einer der Rastaufnahmen 92 aufgenommen ist, eine Drehbewegung des Endeffektors 18 um die Endeffektor-Drehachse 42 blockiert ist.

Wie aus Fig. 7 ersichtlich, ist das Rastelement 90 beispielhaft und bevorzugt im Bereich des geschlossenen Endes 66 des Führungsschlitzes 56 (Aufnahmeabschnitt 38) angeordnet. Wie vorstehend erwähnt, ist das Rastelement 90 derart angeordnet, dass durch eine axiale Verschiebung des Endeffektors 18 in Einführrichtung 40 das Rastelement 90 in die Rastaufnahme 92 einführbar ist und somit eine Drehverriegelung aktivierbar ist.

Beispielhaft und bevorzugt ist das Rastelement 90 um eine Schwenkachse schwenkbar gehaltert, sodass das Rastelement 90 aus der in Fig. 7 dargestellten Verriegelungsstellung (in welcher das Rastelement 90 in eine der Rastaufnahmen 92 eingreift und somit ein Verdrehen des Endeffektors 18 um die Endeffektor-Drehachse 42 blockiert) in eine Freigabestellung überführbar bzw. schwenkbar ist, in welcher das Rastelement 92 nicht mehr in die Rastaufnahme 92 eingreift (und somit ein Verdrehen des Endeffektors 18 um die Endeffektor-Drehachse 42 möglich ist). Bei nicht dargestellten Ausgestaltungen kann das Rastelement 90 auch translatorisch verlagerbar gehaltert sein.

Beispielhaft und bevorzugt ist das Rastelement 92 in die Verriegelungsstellung beaufschlagt. Im Beispiel ist hierzu eine Federeinrichtung 94 vorgesehen. Das Rastelement 92 ist insofern entgegen der Beaufschlagung durch die Federeinrichtung 94 in Richtung der Freigabestellung schwenkbar. Wie vorstehend erwähnt, ist das Rastelement 90 in der Freigabestellung vorzugsweise bündig mit der Wandung 66 angeordnet, welche den Anschlag 70 für den Einführabschnitt 36 bildet (vgl. Fig. 4a).

Wird nun beispielsweise der Einführabschnitt 36 in einer solchen Drehlage um die Endeffektor-Drehachse 42 in den Aufnahmeabschnitt 38 eingeführt, dass ein zwischen zwei Rastaufnahmen 92 angeordneter Abschnitt 96 dem Rastelement 90 zugewandt ist (das Rastelement 90 also mit keiner Rastaufnahme 92 fluchtet; bspw. wenn der Endeffektor in Fig. 8 um 45° um die Endeffektor-Drehachse 42 gedreht wäre), wird das Rastelement 90 entgegen der Federvorspannung um die Schwenkachse verschwenkt bis schließlich der Einführabschnitt 36 an der Wandung 66 anliegt (Endlage).

Um die Drehverriegelungseinrichtung 88 zu aktivieren, kann dann der Endeffektor 18 (und somit der Einführabschnitt 36) um die Endeffektor-Drehachse 42 solange gedreht werden, bis eine der Rastaufnahmen 92 mit dem Rastelement 90 fluchtet und das Rastelement 90 aufgrund der Federvorspannung in diese Rastaufnahme 92 schnappt.

Wie aus Fig. 7 ersichtlich, umfasst die Kopplungseinrichtung 20 außerdem eine optionale Axial-Verriegelungseinrichtung 98, welche dazu ausgebildet ist, ein Verschieben des Einführabschnitts 36 aus dem Aufnahmeabschnitt 38 heraus, insbesondere ein Verschieben des Einführabschnitts 36 aus der Endlage entgegen der Einführrichtung 40, zu verhindern. Im Beispiel umfasst die Axial-Verriegelungseinrichtung 98 einen Schwenkriegel 100, welcher um eine Schwenkachse 102 schwenkbar an der Bedienvorrichtung 26 gehaltert ist. Der Schwenkriegel 100 ist in Fig. 7 in einer Verriegelungsstellung gezeigt, in welcher der Schwenkriegel 100 mit einem Verriegelungsabschnitt 104 des Einführabschnitts 36 derart, insbesondere formflüssig, zusammenwirkt, dass ein Verschieben des Einführabschnitts 36 entgegen der Einführrichtung 40 blockiert ist. Um die Axial-Verriegelungsvorrichtung 98 zu lösen kann der Schwenkriegel 100 dann um die Schwenkachse 102 derart verschwenkt werden ((bspw. durch Betätigen des Betätigungsabschnitts 106; in Fig. 7 im Uhrzeigersinn), dass der Verriegelungsabschnitt 104 an dem Schwenkriegel 100 vorbeigleiten kann.

Beispielhaft und bevorzugt ist der Schwenkriegel 100 in die Verriegelungsstellung beaufschlagt, z.B. mittels einer Federeinrichtung 108. Die Axial-Verriegelungseinrichtung 98 ist insofern derart ausgebildet, dass sie dann, wenn sich der Einführabschnitt 36 in der Endlage befindet, selbsttätig auslöst.

Eine solche Axial-Verriegelungseinrichtung 98 kann auch bei der Ausgestaltung gemäß den Figuren 1 bis 6 vorgesehen sein.

## Patentansprüche

1. Schlauchheber (10), umfassend
- einen sich entlang einer Hubschlauch-Längsachse (14) erstreckenden Hubschlauch (12);
- einen Endeffektor (18), insbesondere Sauggreifvorrichtung (22);
- eine Kopplungseinrichtung (20), mittels welcher der Endeffektor (18) an den Hubschlauch (12) ankoppelbar ist, wobei die Kopplungseinrichtung (20) einen Hubschlauch-seitigen ersten Kopplungsabschnitt (32) und einen Endeffektor-seitigen zweiten Kopplungsabschnitt (34) aufweist, wobei einer der Kopplungsabschnitte (34) einen Einführabschnitt (36) und der andere Kopplungsabschnitt (32) einen Aufnahmeabschnitt (38) zur Aufnahme des Einführabschnitts (36) aufweist,
wobei der Einführabschnitt (36) und der Aufnahmeabschnitt (38) derart ausgebildet sind, dass der Einführabschnitt (36) in, insbesondere nur, einer, vorzugsweise zu der Hubschlauch-Längsachse (14) orthogonalen, Einführrichtung (40) in den Aufnahmeabschnitt (38) einführbar ist und durch Einführen des Einführabschnitts (36) in den Aufnahmeabschnitt (38) in Einführrichtung (40) der Endeffektor (18) und der Hubschlauch (12) miteinander verbindbar sind, **dadurch gekennzeichnet, dass** der Einführabschnitt (36) in beliebigen Drehlagen um eine zu der Einführrichtung (40) orthogonale Endeffektor-Drehachse (42) in den Aufnahmeabschnitt (38) in Einführrichtung (40) einführbar ist und wobei der Einführabschnitt (36) zumindest abschnittsweise rotationssymmetrisch um die Endeffektor-Drehachse (42) ausgebildet ist.

2. Schlauchheber (10) nach Anspruch 1, wobei der Aufnahmeabschnitt (38) einen sich entlang der Einführrichtung (40) axial erstreckenden Führungsschlitz (56) aufweist.

3. Schlauchheber (10) nach dem vorherigen Anspruch, der Führungsschlitz (56) umfassend ein offenes Ende (64) zur Einführung des Einführabschnitts (36) und ein geschlossenes Ende (36), wobei das geschlossene Ende (36) einen Anschlag (68) für den Einführabschnitt (36) bildet, wobei der Anschlag (68) eine Endlage des Einführabschnitts (36) in dem Aufnahmeabschnitt (38) in Einführrichtung (40) definiert.

4. Schlauchheber (10) nach einem der vorherigen Ansprüche, wobei der Einführabschnitt (36) und der Aufnahmeabschnitt (38) derart ausgebildet sind, dass der Einführabschnitt (36) auch dann, wenn er in den Aufnahmeabschnitt (38) eingeführt ist, relativ zu dem Aufnahmeabschnitt (38) um die Endeffektor-Drehachse (42) verdrehbar ist.

5. Schlauchheber (10) nach einem der vorherigen Ansprüche, wobei der Einführabschnitt (36) und der Aufnahmeabschnitt (38) derart ausgebildet sind, dass der Einführabschnitt (36) in dem Aufnahmeabschnitt (38) entlang der Endeffektor-Drehachse (42) formschlüssig gehalten ist.

6. Schlauchheber (10) nach einem der vorherigen Ansprüche, wobei der Einführabschnitt (36) einen Vorsprung (44) aufweist, welcher sich in einer, insbesondere zu der Endeffektor-Drehachse (42) kollinearen, Vorsprungrichtung (46) erstreckt, insbesondere von dem Endeffektor (18) oder dem Hubschlauch (12) weg.

7. Schlauchheber (10) nach dem vorherigen Anspruch, wobei der Aufnahmeabschnitt (38) im eingeführten Zustand des Einführabschnitts (36) den Vorsprung (44) zumindest abschnittsweise hintergreift oder umgreift, insbesondere derart, dass der Einführabschnitt (36) in dem Aufnahmeabschnitt (38) entlang der Endeffektor-Drehachse (42) formschlüssig gehalten ist.

8. Schlauchheber (10) nach einem der Ansprüche 6 oder 7, wobei der Vorsprung (44) eine radiale Auskragung und/oder einen im wesentlichen T-förmigen Querschnitt aufweist.

9. Schlauchheber (10) nach einem der vorherigen Ansprüche, wobei der Aufnahmeabschnitt (38) in einem Querschnitt entlang der Einführrichtung (40) betrachtet zu dem Einführabschnitt (36) komplementär ausgebildet ist, insbesondere eine Negativform des Einführabschnitts (36) aufweist.

10. Schlauchheber (10) nach einem der vorherigen Ansprüche, wobei die Kopplungseinrichtung (20) derart ausgebildet ist, dass in zumindest einer Einschiebeposition des Einführabschnitts (36) in dem Aufnahmeabschnitt (38), vorzugsweise in der Endlage des Einführabschnitts (36) in dem Aufnahmeabschnitt (38), eine Fluidverbindung (74) zwischen dem Hubschlauch (12) und dem Endeffektor (18) hergestellt ist, insbesondere wobei der Einführabschnitt (36) eine, insbesondere konzentrisch um die Endeffektor-Drehachse (42) angeordnete, erste Fluidöffnung (76), insbesondere Bohrung, aufweist, und wobei der Aufnahmeabschnitt (38) eine zweite Fluidöffnung (78), insbesondere Bohrung, derart aufweist, dass zumindest in der Einschiebeposition des Einführabschnitts (36) in dem Aufnahmeabschnitt, vorzugsweise in der Endlage des Einführabschnitts (36) in dem Aufnahmeabschnitt(38), eine Strömungsverbindung zwischen der ersten Fluidöffnung (76) und der zweiten Fluidöffnung (78) herstellt ist, insbesondere die erste und die zweite Fluidöffnung (76, 78) miteinander fluchten, weiter insbesondere koaxial zueinander angeordnet sind.

11. Schlauchheber (10) nach einem der vorherigen Ansprüche, wobei die Kopplungseinrichtung (20) eine Drehverriegelungseinrichtung (88) aufweist, welche dazu ausgebildet ist, den Endeffektor (18) dann, wenn der Einführabschnitt (36) in den Aufnahmeabschnitt (38) eingeführt ist, insbesondere sich in der Endlage befindet, gegen eine Verdrehung um die Endeffektor-Drehachse (42) zu sichern, insbesondere wobei die Drehverriegelungseinrichtung (88) derart ausgebildet ist, dass eine Drehverriegelung durch axiale Verlagerung des Einführabschnitts (36) relativ zu dem Aufnahmeabschnitt (38) entlang der Einführrichtung (40) aktivierbar und wieder deaktivierbar ist, insbesondere ohne eine Verlagerung des Endeffektors (18) entgegen der Einführrichtung (40) zu blockieren.

12. Schlauchheber (10) nach dem vorherigen Anspruch, die Drehverriegelungseinrichtung (88) umfassend ein Rastelement (90) und wenigstens eine Rastaufnahme (92) zur Aufnahme des Rastelements (90), wobei das Rastelement (90) und die Rastaufnahme (92) derart ausgebildet und angeordnet sind, dass das Rastelement (90) in zumindest einer Drehlage des Endeffektors (18) um die Endeffektor-Drehachse (42) entlang der Einführrichtung (42) in die Rastaufnahme (92) einführbar ist und somit eine Drehverriegelung aktivierbar ist, insbesondere wobei das Rastelement (90) zwischen einer Verriegelungsstellung und einer Freigabestellung, insbesondere translatorisch oder rotatorisch, verlagerbar gehaltert ist, wobei das Rastelement (90) in die Verriegelungsstellung vorgespannt, insbesondere federvorgespannt, ist, wobei das Rastelement (90) durch Beaufschlagung in Einführrichtung (40) entgegen der Vorspannung in die Freigabestellung überführbar ist.

13. Schlauchheber (10) nach einem der vorherigen Ansprüche, wobei die Kopplungseinrichtung (20) eine Axial-Verriegelungseinrichtung (98) aufweist, welche dazu ausgebildet ist, den Einführabschnitt (36) gegen ein Verschieben aus dem Aufnahmeabschnitt (38) heraus, insbesondere gegen ein Verschieben innerhalb des Aufnahmeabschnitts (38) entgegen der Einführrichtung (40), zu sichern, wobei die Axial-Verriegelungseinrichtung (98) derart ausgebildet ist, dass sie bei Erreichen einer vorbestimmten Einschiebeposition des Einführabschnitts (36) in dem Aufnahmeabschnitt (38), insbesondere bei Erreichen der Endlage, selbsttätig verriegelt.

14. Schlauchheber (10) nach einem der vorherigen Ansprüche, außerdem umfassend eine Bedienvorrichtung (26) mit einem Bediengriff (30) zum Verlagern des Hubschlauchs (12), wobei der Hubschlauch-seitige Kopplungsabschnitt (32) an der Bedienvorrichtung (26) angeordnet ist.

## Claims

1. Tube lifter (10), comprising
- a lifting tube (12) extending along a lifting tube longitudinal axis (14);
- an end effector (18), in particular a suction gripping device (22);
- a coupling device (20), by means of which the end effector (18) can be coupled to the lifting tube (12), the coupling device (20) having a lifting tube-side first coupling portion (32) and an end effector-side second coupling portion (34), one of the coupling portions (34) having an insertion portion (36)and the other coupling portion (32) having a receiving portion (38) for receiving the insertion portion (36), the insertion portion (36) and the receiving portion (38) being designed such that the insertion portion (36) can be inserted into the receiving portion (38) in an insertion direction (40), in particular only one insertion direction, which is preferably orthogonal to the lifting tube longitudinal axis (14), and the end effector (18) and the lifting tube (12) being connectable to one another by inserting the insertion portion (36) into the receiving portion (38) in the insertion direction (40), **characterized in that** the insertion portion (36) can be inserted into the receiving portion (38) in the insertion direction (40) in any rotational position about an end effector rotation axis (42) which is orthogonal to the insertion direction (40), and the insertion portion (36) being formed at least in portions so as to be rotationally symmetrical about the end effector rotation axis (42).

2. Tube lifter (10) according to claim 1, wherein the receiving portion (38) comprises a guide slot (56) which extends axially along the insertion direction (40).

3. Tube lifter (10) according to the preceding claim, the guide slot (56) comprising an open end (64) for insertion of the insertion portion (36) and a closed end (36), wherein the closed end (36) forms a stop (68) for the insertion portion (36), wherein the stop (68) defines an end position of the insertion portion (36) in the receiving portion (38) in the insertion direction (40).

4. Tube lifter (10) according to any of the preceding claims, wherein the insertion portion (36) and the receiving portion (38) are designed such that the insertion portion (36) can also be rotated relative to the receiving portion (38) about the end effector rotation axis (42) when it is inserted into the receiving portion (38).

5. Tube lifter (10) according to any of the preceding claims, wherein the insertion portion (36) and the receiving portion (38) are designed such that the insertion portion (36) is held in the receiving portion (38) in a form-fitting manner along the end effector rotation axis (42).

6. Tube lifter (10) according to any of the preceding claims, wherein the insertion portion (36) comprises a projection (44) which extends in a projection direction (46), which is in particular collinear with the end effector rotation axis (42), in particular away from the end effector (18) or the lifting tube (12).

7. Tube lifter (10) according to the preceding claim, wherein, in the inserted state of the insertion portion (36), the receiving portion (38) engages behind or surrounds the projection (44) at least in portions, in particular in such a way that the insertion portion (36) is held in the receiving portion (38) in a form-fitting manner along the end effector rotation axis (42).

8. Tube lifter (10) according to any of claims 6 or 7, wherein the projection (44) has a radial overhang and/or a substantially T-shaped cross section.

9. Tube lifter (10) according to any of the preceding claims, wherein the receiving portion (38) is designed to be complementary to the insertion portion (36) in a cross section viewed along the insertion direction (40), and in particular has a shape which is a negative of the insertion portion (36).

10. Tube lifter (10) according to any of the preceding claims, wherein the coupling device (20) is designed such that, in at least one insertion position of the insertion portion (36) in the receiving portion (38), preferably in the end position of the insertion portion (36) in the receiving portion (38), a fluid connection (74) between the lifting tube (12) and the end effector (18) is established, in particular wherein the insertion portion (36) comprises a first fluid opening (76), in particular a bore, which is in particular arranged concentrically around the end effector rotation axis (42), and wherein the receiving portion (38) comprises a second fluid opening (78), in particular a bore, such that, at least in the insertion position of the insertion portion (36) in the receiving portion, preferably in the end position of the insertion portion (36) in the receiving portion (38), a flow connection between the first fluid opening (76) and the second fluid opening (78) is established, in particular the first and the second fluid opening (76, 78) are aligned with one another, further in particular are arranged coaxially to one another.

11. Tube lifter (10) according to any of the preceding claims, wherein the coupling device (20) comprises a rotary locking device (88) which is designed to secure the end effector (18) against rotation about the end effector rotation axis (42) when the insertion portion (36) is inserted into the receiving portion (38), in particular when it is in the end position, in particular wherein the rotary locking device (88) is designed such that a rotary lock can be activated and deactivated again by axial movement of the insertion portion (36) relative to the receiving portion (38) along the insertion direction (40), in particular without blocking a movement of the end effector (18) counter to the insertion direction (40).

12. Tube lifter (10) according to the preceding claim, the rotary locking device (88) comprising a latching element (90) and at least one latching receptacle (92) for receiving the latching element (90), wherein the latching element (90) and the latching receptacle (92) are designed and arranged in such a way that the latching element (90) can be inserted into the latching receptacle (92) in at least one rotational position of the end effector (18) about the end effector rotation axis (42) along the insertion direction (42), and thus a rotary lock can be activated, in particular wherein the latching element (90) is held movably, in particular translationally or rotationally, between a locking position and a release position, wherein the latching element (90) is preloaded, in particular spring-preloaded, into the locking position, wherein the latching element (90) can be transferred into the release position counter to the preloading by being acted on in the insertion direction (40).

13. Tube lifter (10) according to any of the preceding claims, wherein the coupling device (20) comprises an axial locking device (98), which is designed to secure the insertion portion (36) against displacement from the receiving portion (38), in particular against displacement within the receiving portion (38) counter to the insertion direction (40), wherein the axial locking device (98) is designed such that it automatically locks when a predetermined insertion position of the insertion portion (36) in the receiving portion (38) is reached, in particular when the end position is reached.

14. Tube lifter (10) according to any of the preceding claims, additionally comprising an operating device (26) having an operating handle (30) for moving the lifting tube (12), wherein the lifting tube-side coupling portion (32) is arranged on the operating device (26).

## Revendications

1. Dispositif de levage à tuyau (10), comprenant
- un tuyau de levage (12) s'étendant le long d'un axe longitudinal de tuyau de levage (14) ;
- un organe terminal effecteur (18), en particulier un dispositif de préhension par aspiration (22) ;
- un appareil d'accouplement (20) au moyen duquel l'organe terminal effecteur (18) peut être accouplé au tuyau de levage (12), dans lequel l'appareil d'accouplement (20) présente une première section d'accouplement (32) côté tuyau de levage et une seconde section d'accouplement (34) côté organe terminal effecteur, dans lequel l'une des sections d'accouplement (34) présente une section d'insertion (36) et l'autre section d'accouplement (32) présente une section de réception (38) permettant de recevoir la section d'insertion (36), dans lequel la section d'insertion (36)
et la section de réception (38) sont réalisées de telle sorte que la section d'insertion (36) peut être insérée dans la section de réception (38) dans, en particulier seulement, un sens d'insertion (40), de préférence orthogonal à l'axe longitudinal de tuyau de levage (14), et, grâce à l'insertion de la section d'insertion (36) dans la section de réception (38) dans le sens d'insertion (40), l'organe terminal effecteur (18) et le tuyau de levage (12) peuvent être reliés entre eux, **caractérisé en ce que**
la section d'insertion (36) peut être insérée dans la section de réception (38) dans le sens d'insertion (40) dans des positions de rotation quelconques autour d'un axe de rotation d'organe terminal effecteur (42) orthogonal au sens d'insertion (40) et dans lequel la section d'insertion (36) est réalisée au moins dans certaines sections avec une symétrie de rotation autour de l'axe de rotation d'organe terminal effecteur (42).

2. Dispositif de levage à tuyau (10) selon la revendication 1, dans lequel la section de réception (38) présente une fente de guidage (56) s'étendant axialement le long du sens d'insertion (40).

3. Dispositif de levage à tuyau (10) selon la revendication précédente, la fente de guidage (56) comprenant une extrémité ouverte (64) pour l'insertion de la section d'insertion (36) et une extrémité fermée (36), dans lequel l'extrémité fermée (36) forme une butée (68) pour la section d'insertion (36), dans lequel la butée (68) définit une position finale de la section d'insertion (36) dans la section de réception (38) dans le sens d'insertion (40).

4. Dispositif de levage à tuyau (10) selon l'une des revendications précédentes, dans lequel la section d'insertion (36) et la section de réception (38) sont réalisées de telle sorte que la section d'insertion (36), même lorsqu'elle est insérée dans la section de réception (38), peut tourner par rapport à la section de réception (38) autour de l'axe de rotation d'organe terminal effecteur (42).

5. Dispositif de levage à tuyau (10) selon l'une des revendications précédentes, dans lequel la section d'insertion (36) et la section de réception (38) sont réalisées de telle sorte que la section d'insertion (36) est maintenue par complémentarité de forme dans la section de réception (38) le long de l'axe de rotation d'organe terminal effecteur (42).

6. Dispositif de levage à tuyau (10) selon l'une des revendications précédentes, dans lequel la section d'insertion (36) présente une saillie (44) qui s'étend dans un sens de saillie (46), en particulier colinéaire à l'axe de rotation d'organe terminal effecteur (42), en particulier en s'éloignant de l'organe terminal effecteur (18) ou du tuyau de levage (12).

7. Dispositif de levage à tuyau (10) selon la revendication précédente, dans lequel la section de réception (38), à l'état inséré de la section d'insertion (36), vient en prise par derrière avec la saillie (44) ou l'entoure au moins dans certaines sections, en particulier de telle sorte que la section d'insertion (36) est maintenue par complémentarité de forme dans la section de réception (38) le long de l'axe de rotation d'organe terminal effecteur (42).

8. Dispositif de levage à tuyau (10) selon l'une des revendications 6 ou 7, dans lequel la saillie (44) présente un porte-à-faux radial et/ou une section transversale sensiblement en forme de T.

9. Dispositif de levage à tuyau (10) selon l'une des revendications précédentes, dans lequel la section de réception (38) est réalisée de manière à être complémentaire à la section d'insertion (36) dans une section transversale vue le long du sens d'insertion (40), en particulier présente une forme négative de la section d'insertion (36).

10. Dispositif de levage à tuyau (10) selon l'une des revendications précédentes, dans lequel l'appareil d'accouplement (20) est réalisé de telle sorte que, dans au moins une position d'introduction de la section d'insertion (36) dans la section de réception (38), de préférence dans la position finale de la section d'insertion (36) dans la section de réception (38), une liaison fluidique (74) est établie entre le tuyau de levage (12) et l'organe terminal effecteur (18), en particulier dans lequel la section d'insertion (36) présente une première ouverture pour fluide (76), en particulier un alésage, en particulier disposé de manière concentrique autour de l'axe de rotation d'organe terminal effecteur (42), et dans lequel la section de réception (38) présente une seconde ouverture pour fluide (78), en particulier un alésage, de telle sorte qu'au moins dans la position d'introduction de la section d'insertion (36) dans la section de réception, de préférence dans la position finale de la section d'insertion (36) dans la section de réception (38), une liaison par écoulement est établie entre la première ouverture pour fluide (76) et la seconde ouverture pour fluide (78), en particulier la première et la seconde ouverture pour fluide (76, 78) sont à fleur l'une de l'autre, en particulier sont disposées coaxialement l'une par rapport à l'autre.

11. Dispositif de levage à tuyau (10) selon l'une des revendications précédentes, dans lequel l'appareil d'accouplement (20) présente un appareil de verrouillage de rotation (88) qui est réalisé pour empêcher l'organe terminal effecteur (18) de tourner autour de l'axe de rotation d'organe terminal effecteur (42) lorsque la section d'insertion (36) est insérée dans la section de réception (38), en particulier lorsqu'elle se trouve dans la position finale, en particulier dans lequel l'appareil de verrouillage de rotation (88) est réalisé de telle sorte qu'un verrouillage de rotation peut être activé et désactivé par un déplacement axial de la section d'insertion (36) par rapport à la section de réception (38) le long du sens d'insertion (40), en particulier sans bloquer un déplacement de l'organe terminal effecteur (18) dans le sens contraire au sens d'insertion (40).

12. Dispositif de levage à tuyau (10) selon la revendication précédente, l'appareil de verrouillage de rotation (88) comprenant un élément d'encliquetage (90) et au moins un logement d'encliquetage (92) permettant de recevoir l'élément d'encliquetage (90), dans lequel l'élément d'encliquetage (90) et le logement d'encliquetage (92) sont réalisés et disposés de telle sorte que l'élément d'encliquetage (90) peut être inséré dans le logement d'encliquetage (92) dans au moins une position de rotation de l'organe terminal effecteur (18) autour de l'axe de rotation d'organe terminal effecteur (42) le long du sens d'insertion (42) et qu'un verrouillage de rotation peut ainsi être activé, en particulier dans lequel l'élément d'encliquetage (90) est maintenu de manière à pouvoir être déplacé, en particulier en translation ou en rotation, entre une position de verrouillage et une position de libération, dans lequel l'élément d'encliquetage (90) est précontraint dans la position de verrouillage, en particulier précontraint de manière élastique, dans lequel l'élément d'encliquetage (90) peut être transféré dans la position de libération par sollicitation dans le sens d'insertion (40) à l'encontre de la précontrainte.

13. Dispositif de levage à tuyau (10) selon l'une des revendications précédentes, dans lequel l'appareil d'accouplement (20) présente un appareil de verrouillage axial (98) qui est réalisé pour empêcher la section d'insertion (36) de coulisser hors de la section de réception (38), en particulier de coulisser à l'intérieur de la section de réception (38) dans le sens contraire au sens d'insertion (40), dans lequel l'appareil de verrouillage axial (98) est réalisé de telle sorte qu'il se verrouille automatiquement lorsqu'une position d'introduction prédéterminée de la section d'insertion (36) dans la section de réception (38) est atteinte, en particulier lorsque la position finale est atteinte.

14. Dispositif de levage à tuyau (10) selon l'une des revendications précédentes, comprenant en outre un dispositif de manipulation (26) comportant une poignée de manipulation (30) permettant de déplacer le tuyau de levage (12), dans lequel la section d'accouplement (32) côté tuyau de levage est disposée sur le dispositif de manipulation (26).
